# EUROPÄISCHE PATENTSCHRIFT

(11) **EP 1 072 367 B1**
(45) Veröffentlichungstag und Bekanntmachung des Hinweises auf die Patenterteilung: **18.09.2002**
(21) Anmeldenummer: 00113626.6
(22) Anmeldetag: 28.06.2000
(51) Int. Cl.: B26D 3/28, B29C 44/56, B29C 44/58

(54) **Verfahren zur Herstellung von Schaumstoffbahnen**
Process for making a foamed sheet
Procédé pour fabriquer des feuilles de mousse thermoplastiques

(30) Priorität: 28.07.1999 DE 19935336
(43) Veröffentlichungstag der Anmeldung: 31.01.2001
(73) Patentinhaber: BASF AKTIENGESELLSCHAFT, 67056 Ludwigshafen (DE)
(72) Erfinder: Möck, Christof, Dr., 68259 Mannheim (DE); Tatzel, Hermann, 69469 Weinheim (DE)

(56) Entgegenhaltungen:
- WO-A-99/16593
- DE-A- 3 602 996
- FR-A- 777 716
- US-A- 3 517 414
- PATENT ABSTRACTS OF JAPAN vol. 015, no. 505 (M-1194), 20. Dezember 1991 (1991-12-20) & JP 03 222726 A (SANPUKU KOGYO KK), 1. Oktober 1991 (1991-10-01)
- PATENT ABSTRACTS OF JAPAN vol. 017, no. 030 (C-1018), 20. Januar 1993 (1993-01-20) & JP 04 248887 A (KIYOUDOU GIKEN KAGAKU KK), 4. September 1992 (1992-09-04)

## Beschreibung

Die Erfindung betrifft ein Verfahren zur Herstellung von Schaumstoffbahnen aus expandiertem Polypropylen (EPP) mit einer Dicke von 4 bis 20 mm.

Das Herstellen von Schaumstoffbahnen durch Abschälen von gesinterten Formteilen ist aus der JP-A-3 222 726 und der JP-A-4 248 887 bekannt.

Formteile aus EPP werden gewöhnlich durch Versintern von EPP-Partikel in Formteilautomaten hergestellt. Mit den derzeit verfügbaren Automaten können Schaumflächen von maximal 2800 x 1400 mm erhalten werden. Die geringste herstellbare Dicke liegt bei 20 mm. Für Sonderanwendungen ist es erwünscht, lange Schaumstoffbahnen mit geringer Dicke zur Verfügung zu haben. Der Erfindung lag daher die Aufgabe zugrunde, derartige Schaumstoffbahnen bereitzustellen.

Gegenstand der Erfindung ist ein Verfahren gemäß Anspruch 1 zur Herstellung von Schaumstoffbahnen aus EPP mit einer Dicke von 4 bis 20 mm, bei dem man die Bahnen von einem zylindrischen Formkörper mit einem Durchmesser von 200 bis 1000 mm spiralförmig abschält.

Ein weiterer Gegenstand der Erfindung sind Schaumstoffbahnen aus EPP-Partikelschaum mit einer Dicke von 4 bis 20 mm, einer Breite von 20 bis 2000 mm und einer Länge von mindestens 5 m.

Unter Polypropylen im Sinne der Erfindung ist zu verstehen:
a) Homopolypropylen,
b) Randomcopolymere des Propylens mit 0,1 bis 15, vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischungen von a) oder b) mit 0,1 bis 75, vorzugsweise 3 bis 50 Gew.-% eines Polyolefin-Elastomeren, z.B. eines Ethylen/Propylen-Blockcopolymeren mit 30 bis 70 Gew.-% Propylen.

Der Kristallitschmelzpunkt (DSC-Maximum) der unter a. bis c. aufgelisteten Polypropylene liegt im allgemeinen zwischen 120 und 170°C. Ihre Schmelzwärme, bestimmt nach der DSC-Methode, liegt vorzugsweise zwischen 20 und 300 J/g, der Schmelzindex MFI (230°C, 2,16 kp nach DIN 53 735 zwischen 0,1 und 100 g/10 min.

Bei einem bevorzugten Verfahren zur Herstellung der EPP-Partikel geht man von Polypropylengranulat aus, welches vorzugsweise mittlere Durchmesser von 0,5 bis 5 mm aufweist. In einem Rührreaktor werden 100 Gew.-Teile dieses Granulats in 100 bis 500 Gew.-Teilen Wasser, mit Hilfe eines Suspendierhilfsmittels dispergiert. Dann wird ein Treibmittel in Mengen von vorzugsweise 2 bis 50 Gew.-Teilen bezogen auf 100 Gew.-Teile Polymer, eingepreßt und der Reaktorinhalt aufgeheizt. Geeignete Treibmittel sind Kohlenwasserstoffe, wie Butan, Halogenkohlenwasserstoffe, Alkohole sowie CO₂, N₂ und NH₃. Die Treibmittelzugabe kann dabei vor oder während des Aufheizens (dazu gehören auch Haltezeiten) des Reaktorinhalts auf die Entspannungstemperatur erfolgen. Diese sollte 5°C unter bis 20°C über, vorzugsweise 2 bis 10°C über dem Kristallitschmelzpunkt des Polypropylens liegen. Bei den bevorzugten Propylenpolymerisaten arbeitet man bei 110°C bis 180°C. Je nach Menge und Art des Treibmittels sowie nach der Höhe der Temperatur stellt sich im Reaktor ein Druck ein, der im allgemeinen höher als 2 bar ist und 100 bar nicht übersteigt. Durch die Wahl der Imprägniertemperatur und des Treibmittels kann die Schüttdichte der entstandenen EPP-Partikel gesteuert werden. Nach Erreichen der Entspannungstemperatur wird der Reaktor entspannt, wobei die Entspannung zweckmäßigerweise in einen Zwischenbehälter erfolgt, in dem ein Druck von vorzugsweise 0,5 bis 5 bar herrscht. Beim Entspannen des Reaktors erfolgt eine Expansion des treibmittelhaltigen Granulats und es entstehend EPP-Partikel mit einem mittleren Durchmesser von 1 bis 20 mm.

Die Schüttdichte der EPP-Partikel ist in weiten Grenzen zwischen 10 und 200 g/l, einstellbar. Besonders geeignet sind EPO-Partikeln mit verhältnismäßig niedrigen Schüttdichten zwischen 15 und 40 g/l. Die Partikel sind überwiegend geschlossenzellig und besitzen eine Zellzahl von 1 bis 5000 Zellen/mm², insbesondere 10 bis 1500 Zellen/mm².

Diese Schaumstoffpartikel werden nun in einem Formteilautomaten mit Hilfe von Wasserdampf in perforierten Werkzeugen miteinander verschweißt.

Zur Herstellung der zylindrischen Formkörper verwendet man zweckmäßigerweise ein Werkzeug, das aus zwei Werkzeughälften mit jeweils einer halbzylinderförmigen Aussparung besteht. Mittig darin fixiert befindet sich ein perforierter Rohrkern mit einem Durchmesser von 50 bis 400 mm, vorzugsweise von 100 bis 300 mm. In dem Hohlraum dieses Werkzeugs werden nun die EPP-Partikel eingefüllt, aufgeschmolzen und miteinander verschweißt. Es entsteht ein zylindrischer Formkörper, der je nach Dimension des Werkzeugs einen Durchmesser von 200 bis 1000, vorzugsweise von 400 bis 800 mm hat.

Von diesem Schaumstoffzylinder werden nun erfindungsgemäß die Schaumstoffbahnen spiralförmig abgeschält, wobei der Rohrkern als Schälachse dient. Dazu können übliche Schälmaschinen mit einem Messerband verwendet werden.

Die erhaltenen Schaumstoffbahnen haben eine Dicke von 4 bis 20, vorzugsweise von 5 bis 15 mm, eine Breite von 20 bis 2000, vorzugsweise von 100 bis 1000 mm und eine Länge von mindestens 5 mm, vorzugsweise von 10 bis 100 m. Derartige Schaumstoffbahnen aus EPP-Partikelschaum sind neu. Bekannt sind Schaumstoffbahnen aus Polypropylen-Extruderschaum. Deren Herstellung durch Schaumextrusion ist aber wesentlich aufwendiger.

Die erfindungsgemäßen Schaumstoffbahnen können als Verpackungs- und Isoliermaterialien sowie im Kfz-Bereich, z.B. als Autohimmel, verwendet werden.

## Patentansprüche

1. Verfahren zur Herstellung von Schaumstoffbahnen aus expandiertem Polypropylen (EPP) mit einer Dicke von 4 bis 20 mm durch spiralförmiges Abschälen von einen zylindrischen Formkörper mit einem Durchmesser von 200 bis 1000 mm, **dadurch gekennzeichnet, daß** der Formkörper hergestellt wurde durch Aufschäumen und Verschweißen von überwiegend geschlossenzelligen Schaumpartikeln mit einem mittleren Durchmesser von 1 bis 20 mm und einer Schüttdichte zwischen 15 und 40 g/l aus Polypropylen mit einem Schmelzindex MFI (230°C, 2,16 kp) nach DIN 53 753 zwischen 0,1 und 100 g/10 min.

2. Verfahren nach Anspruch 1, **dadurch gekennzeichnet, daß** die Polypropylen-Schaumpartikel unvernetzt sind.

3. Schaumstoffbahnen aus überwiegend geschlossenzelligem, unvernetztem Polypropylen-Partikelschaum mit einer Dicke von 4 bis 20 mm, einer Breite von 20 bis 2000 mm und einer Länge von mindestens 5 m.

## Claims

1. A process for producing foam webs made from expanded polypropylene (EPP) with a thickness of from 4 to 20 mm by helical skiving of a cylindrical molding with a diameter of from 200 to 1000 mm, which comprises producing the molding by foaming and fusing predominantly closed-cell foam beads with an average diameter of from 1 to 20 mm and a bulk density of from 15 to 40 g/l made from polypropylene with a melt flow index MFI (230°C, 2.16 kp) of from 0.1 to 100 g/10 min to DIN 53 753.

2. A process as claimed in claim 1, wherein the polypropylene foam beads have not been crosslinked.

3. A foam web made from predominantly closed-cell uncrosslinked moldable polypropylene foam with a thickness of from 4 to 20 mm, a width of from 20 to 2000 mm, and a length of at least 5 m.

## Revendications

1. Procédé de préparation de bandes de mousse en polypropylène expansé (EPP) ayant une épaisseur de 4 à 20 mm par pelage spiralé à partir d'un corps façonné cylindrique ayant un diamètre de 200 à 1.000 mm, **caractérisé en ce que** le corps façonné est préparé par moussage et soudage de particules de mousse d'une manière prépondérante à cellules fermées, ayant un diamètre moyen de 1 à 20 mm et une masse volumique apparente comprise entre 15 et 40 g/litre, à base de polypropylène ayant un indice de fusion MFI (230°C, 2,16 kgp) selon la norme DIN 53 753 compris entre 0,1 et 100 g/10 minutes.

2. Procédé suivant la revendication 1, **caractérisé en ce que** les particules de mousse à base de polypropylène sont non réticulées.

3. Bandes à base d'une mousse de particules de polypropylène non réticulées, d'une manière prépondérante à cellules fermées, ayant une épaisseur de 4 à 20 mm, une largeur de 20 à 2.000 mm et une longueur d'au moins 5 mètres.
